# FASCICULE DE BREVET EUROPEEN

(11) **EP 2 358 778 B1**
(45) Date de publication et mention de la délivrance du brevet: **28.11.2018**
(21) Numéro de dépôt: 09803823.5
(22) Date de dépôt: 08.12.2009
(51) Int. Cl.: C08G 18/22, C08G 18/78, C08G 18/62, C08G 18/48, C08G 18/42, C08G 18/79, C08G 18/09, C08G 18/28, C08G 18/32, C08G 18/40, C09D 175/04

(54) **PROCEDE DE PREPARATION D'ALLOPHANATE, ALLOPHANATE ET COMPOSITION DE FAIBLE VISCOSITE COMPRENANT L'ALLOPHANATE**
VERFAHREN ZUR HERSTELLUNG EINES ALLOPHANATS, ALLOPHANAT UND NIEDERVISKOSE ZUSAMMENSETZUNG, DIE DAS ALLOPHANAT ENTHÄLT
METHOD FOR PREPARING AN ALLOPHANATE, ALLOPHANATE, AND LOW-VISCOSITY COMPOSITION CONTAINING THE ALLOPHANATE

(30) Priorité: 08.12.2008 FR 0858328
(43) Date de publication de la demande: 24.08.2011
(73) Titulaire: Vencorex France, 69800 Saint-Priest (FR)
(72) Inventeur: BERNARD, Jean-Marie, F-69440 Saint-Laurent d'Agny (FR); SCHWARZ, Johannes, F-69009 Lyon (FR); OLIER, Philippe, F-69007 Lyon (FR)
(74) Mandataire: Dennemeyer & Associates S.A.
(86) Numéro de dépôt international: PCT/FR2009/052443
(87) Numéro de publication internationale: WO 2010/067005

(56) Documents cités:
- EP-A- 1 970 394
- EP-A- 2 025 693
- JP-A- 2004 315 598
- JP-A- 2006 335 783
- US-A1- 20060 180 274
- US-B1- 6 420 508
- US-B1- 6 590 028

## Description

La présente invention concerne un procédé de préparation d'allophanate, Une composition polyisocyanate de viscosité abaissée comprenant l'allophanate, destinée à des compositions de revêtement, en particulier de peinture, à deux composants, est également décrite.

L'invention concerne en particulier un procédé de préparation d'allophanate par réaction d'un (ou plusieurs) isocyanate(s) avec au moins un monoalcool comprenant une fonction éther ou polyéther, la réaction étant effectuée en présence d'un composé contenant du bismuth à titre de catalyseur et d'un composé métallique à titre de co-catalyseur choisi parmi les carboxylates de métal alcalin ou alcalino-terreux, la teneur en composé métallique étant comprise de 0,5 à 100 ppm par rapport à la quantité de monoalcool.

Les polyisocyanates sont utilisés largement dans l'industrie du revêtement, en particulier des peintures, en raison de leurs nombreuses propriétés. Il est notamment connu de mettre en oeuvre, en tant que durcisseurs, des polyisocyanates comprenant des groupes isocyanurates en raison de leur capacité de réticulation.

Toutefois, les compositions de ce type obtenues par trimérisation d'un isocyanate ont une viscosité relativement élevée qui nécessite l'utilisation d'une quantité substantielle de solvant.

Or, les réglementations nouvelles en matière de contrôle de l'environnement imposent la diminution des composés organiques volatils.

Pour répondre à ces exigences, une des possibilités consiste à limiter le taux de transformation des isocyanates de départ, notamment des diisocyanates afin de minimiser la formation de composés lourds (polycondensats de plus haut degré de polymérisation, plus particulièrement comprenant plus d'un motif trimère), présents dans le milieu de trimérisation responsables de l'augmentation de la viscosité. A cet effet, on réduit la quantité de catalyseur pour un temps de réaction fixé, ou on diminue la durée de réaction pour une quantité de catalyseur donnée, afin d'augmenter le rapport cyclotrimères vrais/composés lourds.

La Demanderesse commercialise déjà des produits de ce type, HDT (Hexaméthylène Diisocyanate Trimère) et HDB (Hexaméthylène Diisocyanate Biuret), désignés sous l'acronyme anglo-saxon LV par "Low Viscosity".

Les inconvénients de ces modes opératoires sont, dans le premier cas, une baisse importante de la productivité et dans le second, une augmentation du coût due à la quantité de catalyseur utilisée pour une quantité donnée d'isocyanurates.

Il a également été proposé dans les demandes de brevets européens EP 0 524 500 et EP 0 524 501 de réaliser une réaction d'allophanatation sur un mélange de trimérisation ou de réaliser la trimérisation en présence d'alcools, ce qui conduit à des mélanges polyisocyanates à fonctions isocyanurates revendiqués comme présentant une basse viscosité. Ce procédé entraîne la formation d'allophanates d'isocyanates polyfonctionnels, composés qui augmentent de façon significative et néfaste la viscosité des compositions.

Il est également connu d'ajouter des allophanates à des compositions de polyisocyanates comprenant des groupes isocyanurates, pour diminuer leur viscosité. Ainsi, en réalisant de manière séparée la réaction de (cyclo)trimérisation catalytique et la réaction d'allophanatation, on évite la formation d'allophanates d'isocyanates polyfonctionnels, composés qui augmentent de façon significative et néfaste la viscosité de la composition.

Les allophanates sont généralement obtenus par réaction d'un composé à fonction alcool sur un isocyanate, puis par réaction de la fonction carbamate ainsi obtenue sur une nouvelle molécule d'isocyanate.

Des procédés d'obtention d'allophanates sont connus, qui mettent généralement en oeuvre des catalyseurs.

Par exemple, il est connu de préparer des allophanates en utilisant comme catalyseur un ammonium quaternaire. Ainsi on forme des allophanates, mais également des trimères, ce qui n'est pas souhaitable.

Il est également connu de préparer des allophanates en utilisant comme catalyseurs des composés à base d'étain. La réaction nécessite de nombreuses heures, et les composés à base d'étain sont toxiques.

L'invention propose donc un procédé de préparation d'allophanates ne présentant pas ces inconvénients.

Ainsi l'invention propose un procédé de préparation d'allophanate d'un ou plusieurs isocyanates identiques ou différents, ou d'un mélange de différents allophanates, par réaction d'un (ou plusieurs) isocyanate(s) avec au moins un monoalcool comprenant une fonction éther ou polyéther, la réaction étant effectuée en présence d'un composé contenant du bismuth à titre de catalyseur et d'un composé métallique à titre de co-catalyseur choisi parmi les carboxylates de métal alcalin ou alcalino-terreux, la teneur en composé métallique étant comprise de 0,5 à 100 ppm par rapport à la quantité de monoalcool.

Ce procédé est rapide, il met en oeuvre des catalyseurs non toxiques et permet généralement l'obtention d'allophanates de façon sélective. En effet le procédé évite généralement la formation de trimères parallèlement à la formation d'allophanates.

Sont également décrits des allophanates ou mélanges d'allophanates susceptibles d'être obtenus selon le procédé décrit ci-dessus.

Est également décrite une composition d'isocyanates polyfonctionnels tricondensats, de viscosité abaissée, comprenant au moins un isocyanate polyfonctionnel tricondensat vrai, et un allophanate tel que décrit ci-dessus.

Cette composition présente une viscosité significativement abaissée, de préférence d'au moins 1/4, avantageusement environ 1/3, de manière plus avantageuse encore d'environ 2/5, en l'absence de solvant, par rapport à la même composition ne comprenant pas de composés à fonctions allophanates selon l'invention, pour une température donnée.

Enfin, l'utilisation de cette composition pour la réalisation d'un revêtement est décrite.

Le procédé de préparation d'allophanate de l'invention met en oeuvre un monoalcool comprenant une fonction éther ou polyéther.

Par « monoalcool » on entend un composé hydrocarboné comprenant une fonction hydroxyle.

On utilise avantageusement un alcool à chaîne aliphatique incluant les alcools à chaîne cycloaliphatique ou, de préférence un alcool à chaîne alkyle linéaire ou faiblement ramifiée comprenant une seule fonction OH. Il peut s'agir d'un alcool hétérocyclique de type oxétane.

Les alcools appropriés peuvent également éventuellement comprendre une ou plusieurs doubles liaisons.

Le monoalcool de l'invention comprend une fonction éther ou polyéther, avantageusement une fonction (poly)oxyde d'alkylène, de préférence (poly) oxyde d'éthylène (notamment monoéther de polyoxyde d'éthylène comportant avantageusement au plus 10 maillons en moyenne d'oxyde d'éthylène.

D'autres alcools particulièrement avantageux du point de vue de la faible viscosité sont les composés de formule R-[O-CH(R₁)-CH₂]ₙ-OH, dans laquelle dans laquelle R₁ représente H, ou un groupe alkyle de préférence en C₁-C₈, notamment méthyle, ou polyéther, notamment -CH₂OR₁₀, R₁₀ représentant une chaîne hydrocarbonée, notamment polyoxyalkylène, de préférence polyoxyéthylène, n est un nombre entier avantageusement de 1 à 10, de préférence de 1 à 5, et R est un groupe alkyle linéaire ou ramifié en C₁-C₂₀, ou R est un groupe R₂-CO-, R₂ étant un groupe alkyle linéaire ou ramifié en C₁-C₂₀.

Ainsi que mentionné précédemment, la chaîne aliphatique du composé comprenant une fonction OH peut en outre être substituée ou interrompue par un groupe cycloalkyle ou hétérocyclique.

La fonction OH peut être liée directement à un atome de carbone de cycle hydrocarboné ou de l'hétérocycle.

Sont également appropriés les dérivés de type silanol.

Avantageusement le monoalcool de l'invention comprend moins de 5 maillons d'oxyde d'alkylène en moyenne, il comprend de préférence 2 ou 3 maillons d'oxyde d'alkylène en moyenne. Cela permet notamment d'augmenter le titre en NCO de l'allophanate obtenu selon le procédé de l'invention.

On peut également ajouter, lors de la réaction de carbamatation/allophanatation, un mélange de composés à fonction(s) alcool(s) différents. Avantageusement on ne met en oeuvre comme alcool que des monoalcools.

Le procédé de l'invention, selon un mode de réalisation particulier de l'invention, met en oeuvre plusieurs monoalcools différents. Avantageusement il met en oeuvre au moins 3 monoalcools différents, de préférence au moins 8.

Outre les monoalcools de l'invention, d'autres alcools de type différent peuvent être mis en oeuvre. On cite par exemple les alcools alkyliques à chaîne linéaire en C₁-C₁₀, en particulier les alcools en C₄-C₈ .

Le procédé d'allophanatation met en oeuvre un catalyseur qui est un composé contenant du bismuth. Les composés du bismuth présentent notamment l'avantage de ne pas être toxiques

Le composé du bismuth est un composé organométallique comprenant au moins une molécule jouant le rôle de ligand du bismuth.

Le composé du bismuth est un composé de formule Bi(R₁,R₂,R₃) avec R₁, R₂, R₃ qui sont des molécules hydrocarbonées, identiques ou différentes, possédant un nombre de carbones compris entre 1 et 50 atomes de carbone, de préférence entre 1 et 25 atomes de carbone, et ayant au moins une fonction capable de se lier à l'atome de bismuth et dont le pKa dans l'eau est supérieur à 1 de préférence supérieur à 2.

Les fonctions capables de se lier à l'atome de bismuth sont généralement choisies parmi les acides carboxyliques, les alcools ou phénols, les hydroxycarbonates, les thiols, les amines, les carbamoyles (-NH-C(=O). De préférence ces fonctions sont des fonctions acides carblxyliques.

Les molécules R₁, R₂, R₃ peuvent être aliphatiques, cycloaliphatiques, araliphatiques, aromatiques ou hétérocyclique ; elles peuvent être de structure linéaire ou ramifiée, et éventuellement interrompues par des hétéroatomes (oxygène, azote etc.).

L'ensemble (R₁, R₂, R₃) peut constituer une, deux ou trois molécules.

A titre d'exemple de molécules ayant des fonctions capables de se lier à l'atome de bismuth, on peut citer l'acide acétique, l'acide propionique, l'acide octanoique, l'acide décanoique, l'acide dodécanoique, l'acide palmitique, l'acide stéarique, l'acide béhénique, l'acide triméthylacétique, l'acide 2 éthyle hexanoique, l'acide isodécanoique, l'acide isostéarique, les acides de guerbet, l'acide benzoique, l'acide naphtoique, l'acide lactique, l'acide citrique, l'acide salycilique, l'acide gallique, l'acide carbonique, les acides carbamiques, le phénol, les di phénols.

A titre d'exemples de catalyseurs, on peut citer les tri acétate de bismuth, tris (2 éthyle hexanoate) de bismuth, tris (décanoate) de bismuth, tris (palmitate) de bismuth, subsalicylate de bismuth, subgallate de bismuth, lactate de bismuth.

A titre d'exemples de catalyseurs on peut également citer les dérivés d'oxyde de bismuth

On peut également mettre en oeuvre des composés précurseurs du catalyseur.

Les catalyseurs préférés à base de bismuth selon la présente invention sont des tris carboxylates de bismuth.

Les tris carboxylates de bismuth sont de bons catalyseurs de la réaction d'allophanates obtenus à partir de simples alcanols. Ces alcanols sont des molécules monoalcools ou polyalcools formées d'une chaîne alkyle porteuse de fonctions hydroxyles directement attachées sur la chaîne alkyle. On peut citer à titre d'exemple le n-propanol, le n-butanol, le 2-éthylhexanol, le 2-butyl éthyl hexane-1,3-diol, le 2,2,4-triméthylhexane-1,6-diol. En général, ces molécules d'alcanols ne contiennent pas de composés métalliques dans leur structure.

Les quantités de catalyseur sont avantageusement comprises de 0,001% à 0,1%, notamment de 0,001% à 0,05%, en moles de métal, par rapport aux moles d'alcool.

Le procédé de l'invention met également en oeuvre un composé métallique à titre de co-catalyseur, choisi parmi les carboxylates de métal alcalin ou alcalino-terreux. La quantité de ce composé métallique mis en oeuvre est comprise de 0,5 ppm à 100 ppm, de préférence comprise de 1 à 70 ppm, et avantageusement inférieure à 50 ppm par rapport à la quantité de monoalcool.

Dans le cadre de l'utilisation de monoalcools selon l'invention, à savoir des monoalcools comprenant au moins une fonction éther ou polyéther, c'est-à-dire des alcools gras éthoxylés ou des polyalkylènes glycols, la formation de composés isocyanurates a été observée de façon concomitante à la formation des composés allophanates bien que le ratio molaire bismuth (issu du catalyseur à base de triscarboxylates de bismuth) / fonctions hydroxyles soit identique.

Ainsi, les inventeurs ont démontré que la présence de composés organométalliques contenus dans ces alcools gras éthoxylés ou polyalkylène glycols étaient responsables de la co-production de molécules isocyanurates. Ces composés organométalliques sont des impuretés qui proviennent de la synthèse de ces alcools. En effet, la synthèse d'alcools gras éthoxylés ou de polyalkylène glycols est généralement initiée par réaction d'une molécule « initiateur » sur une molécule d'oxyde d'alkylène en présence d'une catalyse basique (ex : soude ou potasse). A la fin de la synthèse de ces molécules d'alcools, la réaction est bloquée par acidification. En général, les acides utilisés pour neutraliser le catalyseur basique sont des acides faibles tels que des acides carboxyliques. On peut ainsi citer à titre d'exemples l'acide acétique, l'acide propionique ou l'acide 2-éthylhexanoïque.

Les alcools gras éthoxylés ou les polyalkylènes glycols contiennent ainsi des quantités plus ou moins élevées de composé métallique (notamment carboxylate métallique), notamment d'acétate de sodium et/ou de potassium.

La présence de quantités élevées (supérieure à 100 ppm) de composé métallique (notamment sodium et/ou potassium) contenues dans les monoalcools utilisés entraîne donc la formation élevée de composés trimères isocyanurates parasites dans la synthèse de composés allophanates catalysée par les composés à base de bismuth. La réaction parasite est néfaste car elle est très exothermique et non contrôlable.

Ainsi, il a été montré que, lorsque la quantité de composé métallique, tel que le sodium et/ou le potassium, contenue dans l'alcool utilisé pour la synthèse d'allophanate est inférieure à 100 ppm, de préférence inférieure à 70 ppm, alors la synthèse des allophanates préparés à partir d'alcools gras éthoxylés et/ou en présence de polyalkylène glycols et d'un isocyanate et catalysée par un composé à base de bismuth (notamment tris carboxylate de Bismuth) se fait sans co-production d'une grande quantité de trimères isocyanurates en général inférieure à 5%. La réaction exothermique est alors maîtrisée et la synthèse d'allophanates se fait sans problèmes particuliers.

Par ailleurs, il a également été montré que :
- la suppression des composés métalliques contenus dans l'alcool gras éthoxylé ou les polyalkylènes glycols par passage de l'alcool sur une résine échangeuse d'ions,
- ou la neutralisation stoechiométrique avec un acide fort tel que l'acide paratoluène sulfonique,
entraîne une diminution de la cinétique de formation de l'allophanate catalysée par les tris carboxylates de bismuth. Le présence de composé métallique est donc nécessaire dans le cadre du procédé de l'invention.

Les carboxylates métalliques, en particulier les métaux alcalins et alcalinoterreux (colonne 1 et 2 de la classification périodique), tels que les carboxylates de sodium et potassium, sont des co-catalyseurs efficaces de la réaction d'allophanates catalysée par les carboxylates de bismuth.

En conséquence, pour optimiser la synthèse d'un allophanate, le procédé de la présente invention comprend la présence d'une quantité de composés métalliques choisi parmi les carboxylates de métal alcalin ou alcalino-terreux comprise de 0,5 à 100 ppm, de préférence de 1 à 70 ppm, **par** rapport à la quantité de monoalcool.

Lesdits composés métalliques sont notamment sous forme de sels d'acides faibles, ces acides faibles étant des acides de pKa supérieur à 2 et inférieur à 6, et étant de préférence des acides carboxyliques.

Selon un mode de réalisation particulièrement avantageux, le ratio molaire co-catalyseur / catalyseur (soit par exemple ratio sodium et/ou potassium / bismuth) utilisé pour la synthèse d'allophanate est compris de 0,01 à 10, et de préférence de 0,1 à 5.

Ces conditions permettent ainsi d'obtenir une composition d'allophanate(s) avec une teneur en trimère isocyanurate inférieure à 5% en poids.

Ledit composé métallique est donc essentiellement présent dans le monoalcool utilisé en raison du procédé de préparation dudit monoalcool. On peut toutefois par ailleurs également envisager l'addition dudit composé métallique dans le milieu réactionnel.

Selon un mode de réalisation particulier du procédé de l'invention (les) isocyanate(s) de départ est (sont) un (des) monomère(s) isocyanate(s)

La présente invention n'est pas limitée à la nature des isocyanates monomères mise en oeuvre. Ainsi, les isocyanates monomères peuvent être mono-, avantageusement di-, tri-, de préférence diisocyanates aliphatiques, y compris cycloaliphatiques et arylaliphatiques, tels que :
- les polyméthylènediisocyanates et notamment l'hexaméthylène diisocyanate, le 2-méthyl pentaméthylène diisocyanate, le 4-isocyanatométhyl octaméthylène diisocyanate et le 2,4,4-triméthyl hexaméthylène diisocyanate ;
- l'isophorone diisocyanate, le norbornane diisocyanate, le 1,3-bis(isocyanatométhyl)cyclohexane (BIC), le H₁₂-MDI et le cyclohexyl 1,4-diisocyanate ;
- les arylènedialcoylènediisocyanates (tel que OCN-(CH₂)ₚ-Φ-(CH₂)_{q}-NCO), p et q étant des nombres entiers identiques ou différents compris de 1 à 6, de préférence de 2 à 4 ;
- ou encore aromatiques tels que le toluylène diisocyanate.

Les isocyanates aromatiques et les isocyanates dont la fonction isocyanate est portée par un carbone néopentylique ne sont pas préférés.

Les isocyanates préférés visés par l'invention sont ceux dans lesquels au moins une, avantageusement deux, de préférence trois des conditions ci-après sont remplies :
- au moins une, avantageusement deux, des fonctions NCO sont reliées à un squelette hydrocarboné, par l'intermédiaire d'un carbone saturé (sp³);
- au moins un, avantageusement deux, desdits carbones saturés (sp³) est porteur d'au moins un, avantageusement deux hydrogène(s). En d'autres termes il a été trouvé que l'on obtenait de meilleurs résultats lorsque le carbone porteur de la fonction isocyanate était porteur d'un hydrogène, de préférence de deux hydrogènes ; il est en outre même préférable que lesdits carbones saturés (sp³) soient au moins pour le tiers, avantageusement au moins pour la moitié, de préférence au moins pour les deux tiers, reliés audit squelette par un atome de carbone lui-même porteur d'au moins un hydrogène, plus préférentiellement deux ;
- tous les carbones intermédiaires à partir desquels les fonctions isocyanates sont reliées au squelette hydrocarboné, sont des carbones saturés (sp³), lesquels sont avantageusement en partie, de préférence en totalité, porteurs d'un hydrogène, de préférence de deux hydrogènes. Il est en outre même préférable que lesdits carbones saturés (sp³) soient au moins pour le tiers, avantageusement au moins pour la moitié, de préférence au moins pour les deux tiers, reliés audit squelette par un atome de carbone lui-même porteur d'au moins un hydrogène, plus préférentiellement deux.

De manière générale, les isocyanates de départ (monomères) préférés sont ceux comportant au moins un enchaînement polyméthylène (comprenant de 2 à 6 chaînons méthylène).

On préfère les isocyanates, en particulier les diisocyanates aliphatiques, notamment les isocyanates d'alkyle en C₁-C₁₀ dans lesquels la chaîne alkyle est linéaire ou faiblement ramifiée. Par "faible ramification", on entend l'absence de carbone tertiaire et néopentylique.

L'HDI, l'IPDI, le NBDI, l'H₁₂-MDI et le MPDI sont particulièrement préférés.

De manière générale, les isocyanates aliphatiques présentant en règle générale une viscosité plus faible que les isocyanates cycloaliphatiques, on préférera éviter d'utiliser des allophanates isocyanates à fonctions cycloaliphatiques lorsque l'effet recherché est d'abaisser la viscosité de (poly)isocyanates isocyanurates obtenus à partir d'isocyanates à fonctions aliphatiques.

Selon le mode de réalisation particulier du procédé de l'invention où (les) isocyanate(s) de départ est (sont) un (des) monomère(s) isocyanate(s), celui-ci consiste en une réaction du (des) monomère(s) (identiques ou différents) avec un alcool pour former un carbamate, en présence du catalyseur, et réaction simultanée ou subséquente du carbamate avec un (des) monomère(s) (identiques ou différents entre eus et identiques ou différents des précédents) pour obtenir un allophanate ou un mélange d'allophanates.

On utilisera avantageusement le même catalyseur pour la réaction de carbamatation et pour la réaction d'allophanatation. Toutefois, on pourra utiliser des catalyseurs différents.

Les réactions de carbamatation et d'allophanatation peuvent être réalisées en deux temps, par exemple en augmentant la température du milieu réactionnel jusqu'à ce qu'ait lieu la réaction de carbamatation et en augmentant ultérieurement la température jusqu'à se produise la réaction d'allophanatation.

Les deux réactions peuvent également avoir lieu simultanément par augmentation de la température de réaction d'emblée jusqu'à la température d'allophanatation.

Le procédé de l'invention comprend une réaction de carbamatation classique suivie d'une réaction d'allophanatation classique, les deux réactions pouvant être catalysées par un même catalyseur ou une combinaison de catalyseurs, et les deux réactions pouvant se dérouler de manière simultanée dans un réacteur unique.

Dans un premier temps, (les) isocyanate(s) utilisé(s) pour la réaction d'allophanatation est(sont) mis à réagir en présence du catalyseur d'allophanatation avec un ou plusieurs composé(s) monoalcool(s). La réaction est conduite à une température qui est avantageusement d'environ 80°C à environ 100°C, lorsque les réactions de carbamatation et d'allophanatation sont effectuées en deux temps ou directement à une température de l'ordre de 100°C à 180°C lorsque les réactions de carbamatation et d'allophanatation sont effectuées simultanément.

La réaction est généralement poursuivie jusqu'à obtention d'un taux de NCO correspondant à la consommation d'au moins 80 %, de préférence supérieur à 99%, des fonctions alcools.

Lorsque les réactions de carbamatation proprement dite et d'allophanatation sont dissociées, on peut après carbamatation, dans un second temps, élever la température du milieu réactionnel jusqu'à environ 100 à 180°C, de préférence aux alentours de 140°C pour l'HDI, pour réaliser la réaction d'allophanatation, celle-ci étant effectuée en présence du catalyseur d'allophanatation.

En fonction de la température mise en oeuvre, de petites quantités de dimères peuvent également être formées.

La durée de réaction est avantageusement inférieure à 3 heures.

La réaction d'allophanatation est conduite de façon à obtenir majoritairement des monoallophanates, tels que définis ci-dessous.

On peut utiliser un isocyanate différent de celui utilisé dans la réaction de carbamatation. On obtient alors un allophanate mixte.

Le rapport fonctions isocyanates (NCO)/fonctions hydroxyles (OH) mis en oeuvre est de préférence supérieur à 2, encore mieux supérieur à 4. Pour obtenir majoritairement des monoallophanates, le rapport fonctions isocyanates (NCO)/fonctions hydroxyles (OH) est avantageusement élevé. Il est avantageusement supérieur à 4, de préférence supérieur à 8.

La réaction d'allophanatation est menée de manière à ce que la quantité résiduelle de carbamates (produit intermédiaire non totalement transformé) soit faible (généralement inférieure à 30 %, avantageusement inférieure à 20 %, de préférence inférieure à 10 %, encore plus préférentiellement inférieure à 5% en poids). En effet la présence en quantité importante de carbamate augmente la viscosité de la composition, ce qui n'est pas souhaitable.

D'une manière générale, le rapport (Fonctions carbamates issues de la ou des molécule(s) alcool utilisée(s) pour faire l'allophanate)/Fonctions allophanates issues de la ou des molécule(s) alcool utilisée(s) pour faire l'allophanate) est inférieur à 0,5, de préférence à 0,2 et avantageusement inférieure à 0,1.

Les réactions sont suivies en mesurant les titres de NCO.

Avantageusement les monomères résiduels sont éliminés par distillation et recyclés.

Le procédé de l'invention peut être continu (par exemple mis en oeuvre dans un dispositif tubulaire) ou discontinu.

Les allophanates obtenus par le procédé de la présente invention répondent généralement à la formule générale II : 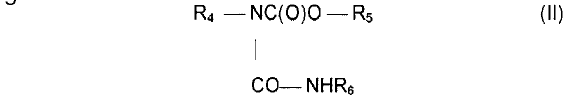 dans laquelle :
- R₄ et R₆ identiques ou différents représentent un groupe hydrocarboné, notamment aliphatique, cycloaliphatique, hétérocyclique ou aromatique, comprenant une fonction isocyanate vraie ou dérivée, et
- R₅ représente le reste d'un composé monoalcool comprenant une fonction éther ou polyéther après réaction de l'hydrogène de la fonction OH.

On entend par fonction isocyanate dérivée, dans ce cas, les fonctions carbamate, urée, biuret, uréthanne, uretinedione, acylurée, isocyanate masquée, allophanate, à l'exclusion de la fonction isocyanurate.

Lorsque R₄ est identique à R₆, on parlera d'homo-allophanates, obtenus par condensation sur un carbamate formé par réaction d'un isocyanate de formule R₄NCO avec un alcool de formule R₅0H, d'un second isocyanate, de formule R₆NCO, R₆ étant identique à R₄.

Les allophanates peuvent également être obtenus par condensation sur le carbamate d'un second isocyanate R₆NCO, R₆ étant différent de R₄, auquel cas on parlera d'allophanates mixtes.

Avantageusement, le mélange d'allophanates comprend au moins 1/4, avantageusement au moins 1/3, de préférence au moins 1/2 (en masse) de monoallophanates.

Le mélange peut également comprendre des bis-allophanates, tris-allophanates et allophanates lourds, ainsi que de manière minoritaire, du carbamate de(s) isocyanate(s) (R₄NCO et/ou R₆NCO) et d'alcool (R₅OH).

Il est très souhaitable que le mélange comprenne au plus 1/2 (en masse), avantageusement au plus 1/3, de préférence 1/6, d'allophanates lourds (comprenant plus de trois fonctions allophanates).

Le monoallophanate est obtenu à partir d'une molécule d'alcool porteuse d'une fonction hydroxyle primaire ou secondaire transformée en fonction allophanate.

Ainsi, on a un monoallophanate lorsque la condition suivante est vérifiée : (Nombre total de fonctions allophanates par molécule de composé porteuses de fonctions allophanate(s))/ (Nombre de chaînes isocyanates identiques ou différentes engagées dans les fonctions allophanates portées par la molécule de composé porteuses de fonctions allophanate(s))=1/2.

Un bis-allophanate est une molécule qui se caractérise par le fait qu'elle comporte deux fonctions allophanates, séparées par une chaîne au moins partiellement hydrocarbonée.

La molécule de bis-allophanate comprend 3 monomères isocyanates et 2 molécules d'alcool dont les fonctions hydroxyles ont été transformées en fonctions allophanates.

Les tris-allophanates sont définis de la même manière que les bis-allophanates.

En outre, on peut également ajouter aux isocyanates polyfonctionnels tricondensats une combinaison d'homoallophanates différents, d'allophanates mixtes différents ou d'un mélange de ces deux catégories ou encore un mélange d'homoallophanates, et/ou d'allophanates mixtes obtenus avec des alcools différents.

Par allophanates lourds, on entend les produits allophanates n'entrant dans aucune des catégories précédemment définies.

En particulier, entrent dans la catégorie des allophanates lourds, les allophanates comprenant une fonction isocyanate dérivée (biuret, et/ou isocyanurate) et au moins une fonction allophanate et les composés comportant au moins quatre fonctions allophanates encore désignés par le terme allophanates tricondensats

Selon un autre mode de réalisation particulier du procédé de l'invention, le (les) isocyanate(s) de départ est (sont) un (des) uréthane(s)

La réaction de préparation des composés allophanates se caractérise par réaction d'une molécule possédant au moins une fonction isocyanate sur une molécule possédant au moins une fonction uréthane usuellement appelée carbamate, caractérisée par l'enchaînement R-NH-C(=O)-O-.

Le ratio molaire des fonctions NCO / fonctions carbamates est généralement compris de 1 à 50, avantageusement compris de 3 à 25, de préférence compris de 5 à 20.

La température de réaction est comprise de 20°C à 200°C, de préférence de 100 à 180°C.

Les quantités de catalyseur sont avantageusement comprises de 0,001 à 0,1 %, notamment de 0,001 à 0,05%, en moles de métal, par rapport aux moles de carbamates.

Le rapport fonctions isocyanates (NCO)/fonctions carbamates est avantageusement élevé. On mettra en oeuvre de préférence un rapport supérieur à 2, encore mieux supérieur à 4, un rapport de l'ordre de 8 étant particulièrement intéressant.

Les composés uréthanes utilisés comme composés de départ sont des composés connus de l'homme du métier, ainsi que leur préparation.

Dans la mesure où la fonction carbamate résulte de la réaction d'une molécule possédant au moins une fonction isocyanate (NCO) sur une molécule possédant au moins une fonction hydroxyle (OH), on peut ajouter le catalyseur dès le départ de la réaction quand on met en contact la molécule avec la fonction isocyanate avec la molécule porteuse de la fonction hydroxyle.

On peut soit mélanger l'ensemble des constituants ou réaliser des réactions successives .

Selon un mode de réalisation particulier du procédé de l'invention, la réaction de l'isocyanate avec le monoalcool peut également être effectuée en présence de composés antioxydants à titre de co-catalyseurs. Ces composés antioxydants se présentent notamment sous la forme d'un mélange comprenant un phénol encombré et un triester de phosphite.

Les phosphites pouvant être mis en oeuvre sont par exemple représentés par la formule (R₁O)₃P, chaque R₁ représentant indépendamment les uns des autres un groupe alkyle de 1 à 20 atomes de carbone, ou un groupe aryle, le cas échéant substitué par un groupe alkyle de 1 à 20 atomes de carbone, et les groupes alkyles pouvant être le cas échéant substitués par un halogène tel que le chlore.

Parmi les phosphites préférés, on peut citer les monophosphites comme le triéthylphosphite, le tributylphosphite, le tris(2-éthylhexyl)phosphite, le tridécyl-phosphite, le trilaurylphosphite, le tris(tridécyl)phosphite, le tristéarylphosphite, le triphénylphosphite, le tris(nonylphényl)phosphite, le tris(2,4-di-t-butylphényl) phosphite, le diphényldécylphosphite et le diphényl(tridécyl)phosphite, les di-, tri- ou tétraphosphites dérivés des polyols, comme le distéaryl-pentaérythritol-diphosphite, le di-tridécyl-pentaérythritol-diphosphite, le dinonylphénylpentaérythritol-diphosphite, le tétraphényl-tétratridécyl-pentaérythritol-tétra-phosphite, le tétraphényl-dipropylèneglycol-diphosphite et le tripentaérythritol-triphosphite; les diphosphites dérivés des composés bisphénol, comme les C1-20 di-alkyl-bisphénol A-diphosphites et le 4,4'-butylidène-bis(3-méthyl-6-t-butylphényl-di-tridécyl) phosphite, les polyphosphites comme les polymères bisphénol A phosphite hydrogénés et le tris(2,3-dichloropropyl)phosphite.

Plus particulièrement, le procédé de l'invention comprend l'utilisation de tributylphosphite.

L'expression "phénol encombré" désigne les composés phénols comprenant au moins un substituant en position ortho.

Plus particulièrement, les anti-oxydants de type phénol encombré peuvent être choisis parmi les phénols substitués en position ortho, les 2,6-dialkylphénols, les bisphénols, les amides de β-(3,5-di-t-butyl-4-hydroxyphényl)-acide propionique, les esters de β-(3,5-di-t-butyl-4-hydroxyphényl)-acide propionique avec des alcools mono- ou polyvalents.

Des exemples d'anti-oxydants de type phénol encombré sont le 2,6-di-t-butylparacrésol, le 3,5-triméthyl-2,4,6-tris(3,5-di-t-butyl-4-hydroxybenzyl)benzène, le tris(3,5-di-t-butyl-4-hydroxybenzyl)isocyanurate, le stéaryl β-(3,5-di-t-butyl-4-hydroxyphényl)propionate, le 2,6-di-t-butyl-4-méthylphénol, le pentaérithrityl tétrakis(3,5-di-t-butyl-4-hydroxyphénylpropionate), le bis(β-3,5-di-t-butyl-4-hydroxy-phényléthyl)subérate, le N,N'-bis((3-(3',5'-di-t-butyl-4'-hydroxyphényl)-propionyl)) hexaméthylènediamine. Plus particulièrement, le procédé de l'invention comprend l'utilisation de 2,6-di-t-butyl-4-méthylphénol.

Ainsi, un mode de réalisation particulièrement avantageux de la présente invention comprend la réaction d'un isocyanate avec un monoalcool en présence de 2,6-di-t-butyl-4-méthylphénol et de tributylphosphite.

Il a été constaté que la présence des composés antioxydants susmentionnés permettent de diminuer la coloration du milieu réactionnel.

Les allophanates obtenus par le procédé selon l'invention l'invention peuvent être mis en oeuvre dans des compositions isocyanates, à la fois dans des compositions aqueuses, et dans des compositions comprenant un solvant organique, tel que le toluène.

Est également décrite une composition d'isocyanates polyfonctionnels tricondensats, de viscosité abaissée, comprenant au moins un isocyanate polyfonctionnel tricondensat vrai, et un allophanate(s) ou mélanges d'allophanates obtenu selon le procédé de l'invention.

Les isocyanates polyfonctionnels (cyclo)tricondensats répondent à la formule générale suivante : 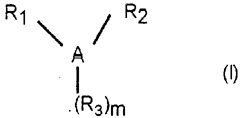 dans laquelle A représente
- un groupe isocyanurate de formule : 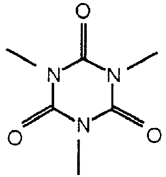
- un de ses dérivés tels que les imino oxadiazine diones de formule suivante : 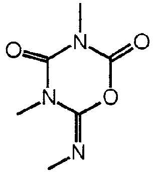
- un de ses dérivés tels que les oxadiazine triones de formule suivante : 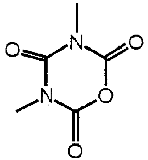
- un groupe biuret de formule 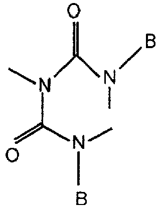 B étant H ou un groupe hydrocarboné, c'est-à-dire contenant du carbone et de l'hydrogène ainsi qu'éventuellement d'autres atomes (O, S, Si, ..) ayant de préférence 1 à 20 atomes de carbone ; ou
- un groupe de formule : 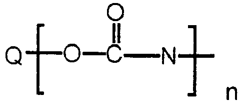 dans laquelle n est un nombre entier de 3 à 4
   et dans laquelle R₁, R₂, R₃ identiques ou différents représentent un groupe hydrocarboné, notamment aliphatique, cycloaliphatique, hétérocyclique ou aromatique, comprenant une fonction isocyanate vraie ou dérivée,
   Q est un groupe hydrocarboné, de préférence alcoyle, tel que défini pour R₁ à R₃,
   m est un nombre entier de 0 à 2.

On entend par fonction isocyanate dérivée les fonctions carbamate, urée, biuret, uréthane, urétinedione, isocyanurate, acylurée, iminooxadiazine dione, oxadiazine trione et isocyanate masquée.

Les isocyanates polyfonctionnels tricondensats peuvent être des homotricondensats (lorsque R₁, R₂ et R₃ sont identiques) ou des hétérotricondensats (lorsque l'un au moins de R₁, R₂ et R₃ est différent des autres).

Les mélanges d'isocyanates polyfonctionnels tricondensats sont définis comme étant une combinaison d'isocyanates polyfonctionnels homotricondensats différents, d'isocyanates polyfonctionnels hétérotricondensats différents ou un mélange des deux catégories.

On parlera d'isocyanate polyfonctionnel tricondensat vrai, lorsque R₁, R₂, R₃ identiques ou différents représentent un groupe -A-X, A étant une chaîne hydrocarbonée, c'est-à-dire comportant au moins du carbone et de l'hydrogène et X un atome d'hydrogène ou un groupe NCO.

On préfère que X représente un groupe NCO.

En d'autres termes, par isocyanate polyfonctionnel tricondensat vrai, on entend les produits de (cyclo)condensation théorique obtenus par condensation de trois moles de monomères, avantageusement d'isocyanates, de préférence diisocyanates voire triisocyanates (identiques ou différents), à l'exception des composés provenant de la condensation de plus de quatre monomères et/ou comportant des groupes allophanates, ainsi que les oligomères isocyanurates obtenus par oligomérisation de (poly)isocyanates isocyanurates.

Tout ce qui a été décrit ci-dessus concernant les allophanates ou mélanges d'allophanates s'applique à l'identique pour la composition, en particulier la nature de ces composés.

Avantageusement la composition comprend au moins un polyisocyanate isocyanurate vrai.

Avantageusement la composition comprend au moins 5%, de préférence au moins 15%, d'allophanate(s) ou mélanges d'allophanates obtenus par le procédé de l'invention.

La composition d'isocyanates polyfonctionnels tricondensats, de viscosité abaissée, de l'invention peut être préparée selon tout mode connu de l'homme du métier de préparation d'une composition.

Les isocyanates polyfonctionnels (cyclo)tricondensats peuvent être obtenus par (cyclo)condensation, en présence d'un catalyseur, d'un ou plusieurs premier(s) isocyanate(s) monomère(s) identiques ou différents jusqu'à obtention du taux de transformation recherché,

La réaction de (cyclo)condensation est avantageusement une réaction de (cyclo)trimérisation, laquelle est réalisée en présence d'un catalyseur de (cyclo)trimérisation connu en soi.

Les isocyanates polyfonctionnels (cyclo)tricondensats et les allophanates sont mélangés selon une méthode connue de l'homme du métier, jusqu'à obtention de la viscosité souhaitée

Avantageusement le(s) isocyanate(s) utilisés pour la préparation des isocyanates polyfonctionnels (cyclo)tricondensats est(sont) identique(s) à(aux) isocyanate(s) utilisés pour la préparation des allophanates.

On peut également, pour diminuer la viscosité d'un isocyanate polyfonctionnel tricondensat d'alkyle supérieur (comportant plus de 10 atomes de carbone), éventuellement ramifié, cycloalkyle ou aromatique donc de viscosité plus élevée que celle d'un polyisocyanate d'alkyle inférieur (comportant 10 atomes de carbone au plus), ajouter au produit de trimérisation un allophanate d'un ou plusieurs isocyanate(s) différent(s) de ceux utilisés pour la préparation des isocyanates polyfonctionnels (cyclo)tricondensats, présentant une plus faible viscosité que celle qui serait obtenue en utilisant un allophanate d'un ou plusieurs isocyanate(s) identiques à ceux utilisés pour la préparation des isocyanates polyfonctionnels (cyclo)tricondensats.

A cet effet, le(s) isocyanate(s) à l'origine de l'allophanate sera(seront) avantageusement un ou plusieurs isocyanate(s) d'alkyle linéaire, en particulier l'HDI.

La cyclo(condensation) est conduite dans les conditions habituelles de trimérisation catalytique d'isocyanates.

On peut citer, à titre d'exemple, pour les tricondensats à fonctions isocyanates la réaction classique de l'HDI par catalyse en présence d'un dérivé aminosilylé notamment un silane ou un disilazane, de préférence d'hexaméthyldisilazane (HMDZ) tel que décrit dans EP 57 653 ou en présence d'un catalyseur d'ammonium quaternaire.

Les conditions réactionnelles comprennent notamment pour une réaction catalysée par l'HMDZ une quantité de catalyseur de l'ordre de 1,2 % en poids par rapport au poids de l'HDI, une durée de réaction d'environ 2 h 30 et une température d'environ 120°C.

Dans ces conditions, le taux de transformation des fonctions isocyanates est de 32,7 %, ce qui correspond à l'obtention d'un mélange (poly)isocyanate isocyanurate dont le taux de fonctions trimères vraies d'HDI (comprenant un cycle isocyanurate unique), est de l'ordre de 50 % en poids.

On peut également citer les réactions catalysées par les acides carboxyliques en présence d'eau pour l'obtention de condensats à motif(s) biuret(s) (brevet FR 86 12 524).

Les compositions obtenues contiennent le(s) isocyanates polyfonctionnels tricondensats vrai(s) ainsi que des condensats lourds, obtenus par (cyclo)condensation catalytique de(s) l'isocyanate(s) monomère(s) de départ, du monoallophanate primaire et des composés allophanates tels que di-, triallophanates ou lourds, de l'alcool ou du mélange d'alcools employés pour la réaction de carbamatation.

La composition est intéressante particulièrement pour les tricondensats comportant des motifs biurets engendrant en général des viscosités élevées. Toutefois, lorsqu'on utilise des tricondensats à base isocyanurate, on préfère que la quantité de composants comportant des motifs biurets ne soit pas élevée (inférieure à 50%, de préférence inférieure à 25%, avantageusement inférieure à 10%).

Toutefois, même quand la teneur en motifs biurets est comprise de 0,5 à 5% en masse des motifs isocyanurates, l'on obtient toujours d'excellents résultats.

La composition ne contient de préférence quasiment pas d'allophanates comportant des motifs tricondensats, notamment isocyanurate obtenu par cyclotrimérisation de l'isocyanate de départ. Avantageusement, elle comprend moins de 15 %, de préférence moins de 5 %, encore plus préférentiellement moins de 1 % en poids, par rapport au poids total de la composition.

Est donc également décrite une composition d'isocyanates polyfonctionnels tricondensats, de viscosité abaissée, comprenant au moins un isocyanate polyfonctionnel tricondensat vrai et au moins un monoallophanate.

Est également décrite une composition d'isocyanates polyfonctionnels tricondensats, de viscosité significativement abaissée, comprenant au moins un isocyanate polyfonctionnel tricondensat vrai et au moins un monoallophanate, ladite composition répondant à au moins une des conditions ci-après :
- un rapport pondéral monoallophanate /(monoallophanate + trimère vrai) compris de 2,5 à 99 %, avantageusement compris de 3 à 60% et de préférence de 3,5 à 40 %,
- les tricondensats sont issus d'une réaction de tricondensation pour laquelle le taux de transformation du ou des monomères isocyanates identiques ou différents en polyisocyanates polyfonctionnels tricondensats contenus dans la composition est supérieur à 8%, de préférence 10%, avantageusement 15 %,

Avantageusement, on préfère que les compositions d'isocyanates polyfonctionnels tricondensats, de viscosité abaissée, comprenant au moins un isocyanate polyfonctionnel tricondensat vrai et au moins un allophanate, répondent à la première condition, voire aux deux conditions ci-dessus.

Pour obtenir des compositions de basse viscosité comprenant des isocyanates polyfonctionnels tricondensats à partir d'isocyanates cycloaliphatiques, on peut procéder de la même manière que décrite ci-dessus et éventuellement ajouter une quantité faible de solvant (en général moins de 1/3, avantageusement moins de 1/4, de préférence moins de 1/10, en poids par rapport au poids total de la composition).

Les compositions décrites peuvent être sous forme de poudres et fournir une viscosité abaissée lors du passage à l'état fondu par rapport aux produits ne comportant pas de monoallophanates.

Les compositions sous leurs différentes formulations, solvantées, aqueuses, hydroorganiques ou sous forme poudres, peuvent également comporter des groupes protecteurs des fonctions isocyanates identiques ou différents. Les fonctions isocyanates peuvent être protégées partiellement ou en totalité. Le rapport fonctions isocyanates libres sur fonctions isocyanates masquées est choisi par l'homme de l'art en fonction de l'application visée.

Les compositions décrites permettent de limiter la quantité de solvant mises en oeuvre, par rapport aux compositions de viscosité abaissée existantes. Les compositions obtenues grâce au procédé selon l'invention peuvent être utilisées en formulations aqueuses avec éventuellement ajout d'additifs de formulations tels que des tensioactifs, ioniques ou non ioniques, ou greffage de manière réversible ou irréversible sur les fonctions isocyanates de composés polyoxyalkylènes divers tels que des dérivés de polyéthylène glycols ou des amines polyoxyéthylénées.

Ces compositions de polyisocyanates, à fonctions isocyanates éventuellement masquées en partie ou en totalité peuvent également conduire à des émulsions ou suspensions telles que décrit dans FR 2 703 357 et EP 0 691 993.

Les polyols peuvent en outre servir d'agents de formulations de ces compositions polyisocyanates pour faire des solutions aqueuses, des émulsions ou des dispersions.

De même, ces compositions peuvent être utilisées pour préparer des compositions polyuréthannes poudres ou solvantées ou en solution aqueuse ou hydroorganique éventuellement masquées par des agents de masquage temporaires et/ou permanents. Le choix du polyol est alors dépendant de l'application visée.

Ces compositions sont utilisées avec des additifs classiques des revêtements, à savoir agents de mouillage, pigments, agents d'étalement, agents de résistance à la rayure et à la frayure (« mar-resistance » en anglais), et tout autre composé connu de l'homme de l'art utilisé dans les applications ci-dessus mentionnées.

Parmi les nombreux avantages que présente le procédé de préparation de la composition selon l'invention, on peut citer outre la viscosité abaissée le fait que le procédé permet de régler la viscosité de manière rapide et aisée par ajustement de la quantité de l'un ou l'autre des composants (isocyanates polyfonctionnels tricondensats ou allophanate(s) du mélange sans être tenu de recourir à une synthèse totale, à partir des monomères de départ et de l'alcool.

L'utilisation de la composition décrite ci-dessus pour la réalisation d'un revêtement, en particulier de peinture, est également décrite.

Les exemples ci-après illustrent l'invention.

Le titre NCO est exprimé soit en % de NCO pour 100 g de mélange, soit en mole de NCO pour 100 g de mélange.

### EXEMPLES

Les produits utilisés sont :
- HDI : hexaméthylène diisocyanate
- TOLONATE HDT® : polyisocyanate isocyanurate sur base HDI commercialisé par la société Perstorp dont le titre en fonctions isocyanates est de 22% en poids et de viscosité de l'ordre de 2400 mPas à 25°C
- TOLONATE HDT LV2® : polyisocyanate isocyanurate sur base HDI commercialisé par la société Perstorp dont le titre en fonctions isocyanates est de 23% en poids et de viscosité de l'ordre de 600 mPas à 25°C
- LR 9046 ® : polyisocyanate isocyanurate sur base HDI commercialisé par la société BASF dont le titre en fonctions isocyanates est de 23,3% en poids et de viscosité de l'ordre de 1033 mPas à 25°C
- RHODASURF LA 30® : Alcools C₁₂-C₁₄ éthoxylés CAS NUMBER: 68439-50-9, produit commercialisé par la société Rhodia
- RHODASURF ISA 2® : Alcools C₁₆-C₁₈ éthoxylés
- RHODASURF L 3 ®: Alcools C₁₀-C₁₆ éthoxylés CAS NUMBER: 68002-97-1, produit commercialisé par la société Rhodia. Le poids moléculaire moyen est 321.
- RHODASURF L 2® : Alcools C₁₀ - C₁₆ éthoxylés CAS NUMBER: 68002-97-1, produit commercialisé par la société Rhodia. Le poids moléculaire moyen est 280.
- K KAT XC 8203® carboxylate de bismuth commercialisé par la société King Industry, la teneur en Bismuth est de 12 % poids
- Copolymère polyéthylène polypropylène glycol de masse 2500. RN Cas : 9003-11- 6
- Ethylène glycol : RN Cas 107-21-1
- RHODOCOAT® X-EZM 502® : polyisocyanate hydrodispersible sur base Hexaméthylène diisocyanate (HDI) qui se caractérise essentiellement par la présence de cycles isocyanurates et dans une moindre mesure de fonctions biurets et de cycles dimères (diazetidine dione). Sa teneur en NCO est d'environ 18,4% et sa viscosité de l'ordre de 3600 mPas à 25°C.
- DMCHA : N,N-diméthylcyclohexylamine, n° CAS [98-94-2], société BASF
- Mélange d'esters de phosphate éthoxylés de masse molaire moyenne égale 710g/mol et dont la première acidité est de 90 mg KOH/g

Les méthodes d'analyse utilisées sont décrites ci après.

### - Méthode de dosage des fonctions isocyanates.

Cette méthode est bien connue de l'homme de l'art. Elle correspond à un dosage des fonctions isocyanates, réalisé par réaction avec une quantité connue de dibutylamine ajoutée en excès. La dibutylamine non réagie est dosée par titration avec une solution d'HCL de titre connue. La différence entre la dibutylamine non réagie et la dibutylamine ajoutée au départ représente la quantité de dibutylamine ayant réagi avec les fonctions isocyanates. On a ainsi accès au titre en fonctions isocyanates contenues dans le milieu réactionnel.

### - Méthode d'analyse de répartition en oligomères

On utilise comme méthode d'analyse la chromatographie de perméation de gel (GPC) couplée à une détection infra rouge. L'analyseur Infra rouge permet de distinguer les différentes fonctions de chaque oligomère. Une quantité connue d'échantillon à analyser est injecté sur un ensemble de 2 colonnes PL GEL en série. L'éluent est le dichlorométhane stabilisé avec de l'amylène. Le benzonitrile est utilisé comme étalon interne (100 microlitre pour 10 ml de dichlorométhane).

### - Méthode de mesure de la viscosité

Il s'agit d'une méthode bien connue de l'homme du métier.

Cette méthode met en oeuvre un rhéomètre RHEOMAT RM 300 de marque LAMY. On introduit dans une cuve le produit à caractériser. On met en marche le module d'agitation qui mesure la viscosité à un cisaillement donné. L'appareil donne la valeur de la viscosité du produit à la température donnée et sur une minute. Le module d'agitation est choisi en fonction de la gamme de viscosité cible.

La température de mesure est 25°C. En général les mesures sont prises pour un gradient de cisaillement de 100 s⁻¹.

### Exemple 1 (comparatif) : Synthèse d'un composé allophanate d'HDI et de RHODASURF LA 30

Cet essai est réalisé avec un ratio molaire NCO/OH de 32 et avec un ratio molaire Bismuth /Rhodasurf LA 30 de 0,02%.

Dans un réacteur tricol équipé d'une agitation, on charge sous courant d'azote 726 g de HDI (4,32 mole), puis 96,6 g de RHODASURF LA 30 (0,28 mole) et 0,09 g de K KAT XC 8203. Le milieu réactionnel est chauffé pour atteindre la température de 140°C. Le milieu réactionnel est maintenu à cette température pendant 1 heure environ. Le titre NCO du milieu réactionnel est régulièrement mesuré par méthode de dosage à la dibutylamine. La réaction est stoppée par ajout de 0,03g d'acide para toluène sulfonique quand le titre NCO du milieu réactionnel correspond au titre théorique attendu. Après 30 minutes, la température du milieu réactionnel est laissée revenir à température ambiante.

Le titre NCO du milieu réactionnel de départ est de 1,031 mole pour 100 g. Le titre NCO du milieu réactionnel final est de 0,956 mole de NCO pour 100 g. Le titre NCO théorique en fin de réaction est de 0,984.

On procède ensuite à 2 distillations successives sur film mince sous vide (sous 1 mm Hg environ) à la température de 160°C pour éliminer la plus grande partie du monomère n'ayant pas réagi.

La quantité obtenue après distillation est de 162 g. Ce qui correspond à un rendement de l'ordre de 20 %.

Le produit final est caractérisé par les données suivantes :
- titre NCO : 0,261 mole de NCO pour 100 g Soit un % pondéral de 10,96%.
- Infra Rouge :
   ∘ 3240 cm⁻¹ : absorbance correspondant au NH allophanate
   ∘ 1719 cm⁻¹ : absorbance correspondant au C=O allophanate
   ∘ 1535 cm⁻¹ : absorbance correspondant au groupe CONH allophanate
   ∘ 1765 cm⁻¹ : absorbance correspondant à la fonction uretidinedione
   ∘ Présence faible de fonctions carbamate résiduel, biuret et isocyanurate

La répartition en oligomères obtenue après séparation par Chromatographie par perméation de gel et analyse Infra rouge est donnée ci après.

**Tableau 1**

| Type d'oligomère | % pondéral |
|---|---|
| | |
| HDI | 0,33 |
| Carbamate de Rhodasurf LA 30 et HDI | 0,8 |
| Dimère vrai de HDI (2 chaînes HDI et un cycle uretidine dione) | 1,2 |
| Biuret vrai de HDI | 2 |
| Oligomères à motifs allophanates | 95,67 |

### Exemples 2 à 6 (comparatifs) : Synthèses de composés allophanate d'HDI et de RHODASURF LA 30

On reproduit l'exemple 1 en utilisant comme alcool le RHODASURF LA 30 (noté dans le tableau ALC 1) mais en modifiant certains paramètres: ratio NCO / OH différent, présence d'un diol ou présence d'un polyol, temps de réaction. Le polyol utilisé est un copolymère polyéthylène glycol - polypropylène glycol.

**Tableau 2**

| N° Ex | Q HDI en g | Q HDI mole | Q alc. 1 en g | Q alc. 1 mole | Polyol Q en g | Ratio NCO/OH | Q Cata en g | Q acide paratoluène sulfonique (TsOH) en g | Temps de réaction |
|---|---|---|---|---|---|---|---|---|---|
| 2 | 712 | 4,23 | 191,5 | 0,535 | | 15,8 | 0,17 | 0,034 | 55 mn |
| 3 | 714 | 4,25 | 95,6 | 0,267 | 0,94 | 15,9 | 0,09 | 0,021 | 65 mn |
| 4 | 714 | 4,25 | 192,2 | 0,534 | non | 15,8 | 0,17 | 0,052 | 60 mn |
| 5 | 713 | 4,24 | 192,2 | 0,534 | 0,92 | 15,8 | 0,21 | 0,056 | 70 mn |
| 6 | 356 | 2,12 | 189,4 | 0,529 | non | 8 | 0,19 | 0,046 | 71 mn |

| | | | | | | | | | |
|---|---|---|---|---|---|---|---|---|---|
| Polyol = Poly (éthylène glycol-propylène glycol) | | | | | | | | | |

### Caractéristiques des composés obtenus

**Tableau 3**

| N° Ex | Q produit final en g | Rendement en % | Titre NCO en % poids | Viscosité en mPas 25°C Rhéomat |
|---|---|---|---|---|
| 2 | 374,5 | 41,5 | 12,26 | 228 |
| 3 | 166 | 20,5 | 10,5 | 261 |
| 4 | 370 | 40,8 | 11,76 | 216 |
| 5 | 342 | 38 | 11,76 | 212 |
| 6 | 353 | 64 | 11,34 | 317 |

Remarque : La quantité en HDI résiduel contenue dans les produits est toujours inférieure à 0,3%.

### Exemples 7 à 9 (comparatifs) : Synthèses de composés allophanate d'HDI et de RHODASURF ISA 2

On procède comme pour les exemples précédents en utilisant comme alcool gras éthoxylé le RHODASURF ISA 2. L'autre alcool utilisé est l'éthylène glycol.

**Tableau 4**

| N° Ex | Q HDI en g | Q HDI mole | Q alc. 1 en g | Q alc. 1 mole | Autre alcool Q en g | Ratio NCO/OH | Q Cata en g | Q TsOH en g | Temps de réaction |
|---|---|---|---|---|---|---|---|---|---|
| 7 | 352 | 2,09 | 183,4 | 0,51 | | 8,2 | 0,02 | 0,08 | 68 |
| 8 | 350 | 2,08 | 94 | 0,26 | non | 15,8 | 0,02 | 0,07 | 65 |
| 9 | 360 | 2,14 | 96,5 | 0,27 | 1,02 | 14,2 | 0,02 | 0,08 | 57 |

| | | | | | | | | | |
|---|---|---|---|---|---|---|---|---|---|
| Polyol = Poly (ethylene glycol-ran-propylene glycol) | | | | | | | | | |

### Caractéristiques des composés obtenus

**Tableau 5**

| N° Ex | Q produit final en g | Rendement en % | Q HDI résiduel en % poids | Titre NCO en % poids | Viscosité en mPas 25°C Rhéomat |
|---|---|---|---|---|---|
| 7 | 300 | 56 | 0,09 | 9,95 | 277 |
| 8 | 164 | 39 | 0,11 | 11,13 | 205 |
| 9 | 176 | 38,5 | Inf à 0,05 | 11,42 | 237 |

### Exemple 10 (comparatif) : Synthèse de composé allophanate d'HDI et de RHODASURF L 3

On reproduit l'exemple 1 mais en utilisant comme alcool éthoxylé le RHODASURF L 3. Comme pour les exemples 2 à 6 certains autres paramètres tels que ratio NCO / OH, présence d'un diol ou présence d'un polyol, temps de réaction peuvent être modifiés.

Le polyol utilisé est un copolymère polyéthylène glycol - polypropylène glycol.

**Tableau 6**

| N° Ex | Q HDI en g | Q HDI mole | Q alc. 1 en g | Q alc. 1 en mole | Polyol Q en g | Ratio NCO/OH | Q Cata en g | Q TsOH en g | Temps de réaction |
|---|---|---|---|---|---|---|---|---|---|
| 10 | 393 | 2,34 | 193,4 | 0,595 | non | 7,86 | 0,19 | 0,058 | 77 mn |

### Caractéristiques du composé obtenu

**Tableau 7**

| N° Ex | Q produit final en g | Rendement en % | Titre NCO en mole / 100g | Titre NCO en % poids | Teneur en HDI résiduel | Viscosité en mPas 25°C Rhéomat |
|---|---|---|---|---|---|---|
| 10 | 366 | 62,4 | 0,265 | 11,13 | 0,35 | 493 |

### Exemples 11 à 13 (comparatif) : Préparation de compositions

Les produits des exemples 7 à 9 sont mélangés 24 h sur un roule-pot avec un polyisocyanate de type Tolonate HDT présentant les caractéristiques suivantes.
Viscosité = 2184 mPa.s à 25°C, % NCO = 21.4 %, 100 % extrait sec

Les caractéristiques des différentes compositions massiques sont données dans le tableau ci-dessous :

**Tableau 8**

| N° exemple | N° exemple produit | % HDT en poids | % produit en poids | Viscosité à 25°C (mPa.s) | NCO % |
|---|---|---|---|---|---|
| 11 | 7 | 70 | 30 | 1047 | 17,9 |
| 12 | 8 | 70 | 30 | 935 | 18,3 |
| 13 | 9 | 70 | 30 | 982 | 18,4 |

### Exemples 14 à 16 (comparatifs) : Compositions commerciales

Il s'agit de produit commerciaux dont les références sont données ci-dessous :

**Tableau 9**

| N° exemple | Produit | % HDT | Viscosité à 25°C (mPa.s) | NCO % |
|---|---|---|---|---|
| 14 | LR9046 | 100 | 1033 | 23,3 |
| 15 | HDT LV2 | 100 | 749 | 23,0 |
| 16 | HDT-LV | 100 | 2184 | 21,4 |

### Exemples 17 à 21 d'application

### Préparation de la formule du vernis acrylique

Il s'agit d'une formule de vernis bi composant pour application réparation automobile.

### Partie A

Les composés sont introduits sous agitation (appareil d'agitation Dispermatt) dans l'ordre du tableau suivant :

**Tableau 10**

| Produit | Quantité (g) | Nature ou fonction | Fabricant |
|---|---|---|---|
| Setalux 1907 BA-75 | 1162,5 | acrylic polyol | Nuplex |
| Setal 1603 BA-78 | 125 | polyester polyol | Nuplex |
| Méthyl amyl cétone | 177,5 | solvant | |
| Solvesso 100 | 72,5 | solvant | ExxonMobil Chemical |
| BYK-315 | 1,75 | Agent d'étalement | BYK Chemie GmbH |
| BYK-332 (10% dans l'acétate de butyle) | 8,25 | Agent mouillant | BYK Chemie GmbH |
| BYK-358 | 5,0 | Agent d'étalement | BYK Chemie GmbH |
| DBTL (1% dans l'acétate de butyle) | 75,0 | catalyseur | |
| TOTAL | 1627,5 | | |

### Partie B

Les produits des exemples 11 à 16 sont dilués par simple mélange selon les proportions données ci-dessous de façon à obtenir le même extrait sec pour la partie B :

**Tableau 11**

| Exemple | Produit exemple | Quantité produit selon exemple (g) | Solvant de dilution (g) |
|---|---|---|---|
| 17 | 11 | 34,7 | 20,4 |
| 18 | 12 | 34,7 | 20,4 |
| 19 | 13 | 34,7 | 20,4 |
| 20 | 14 | 34,6 | 20,4 |
| 21 | 15 | 34,6 | 20,4 |
| 22 | 16 | 34,7 | 20,4 |

Le solvant de dilution est composé d'un mélange d'acétate de butyle et de méthyle amyle cétone dans un rapport massique de 52/48

### Ajustement de la viscosité à la coupe avant application

Les parties A et B sont destinées à être appliquées dans un rapport NCO/OH égal à 1,1 et ramenées à la viscosité de 20-22 secondes mesurée à la coupe DIN 4 à 23°C. L'ajustement de la viscosité à la coupe est réalisé avec le mélange diluant dont la composition est donnée ci-dessous.

**Tableau 12**

| Produits | Quantité (g) |
|---|---|
| Acétate de butyle | 16,1 |
| Méthyle amyle cétone | 133,8 |
| Solvesso 100 | 50,1 |

Les parties A et B sont mélangées selon les proportions décrites dans le tableau et la viscosité à la coupe DIN 4 à 23°C est mesurée. La viscosité est ensuite ajustée avec le mélange de solvants décrit ci-dessus.

Les quantités utilisées sont les suivantes :

**Tableau 13**

| Exemple | N° exemple | Partie A (g) | Partie B (g) | Diluant (g) | Viscosité dilution(s) | Viscosité dilution(s) |
|---|---|---|---|---|---|---|
| 17 | 11 | 65,1 | 43,1 | 0 | 21,4 | 21,4 |
| 18 | 12 | 65 | 42,2 | 0 | 21,3 | 21,3 |
| 19 | 13 | 65,1 | 42,1 | 0 | 21,5 | 21,5 |
| 20 | 14 | 71,5 | 36,5 | 3,34 | 23,5 | 20,8 |
| 21 | 15 | 71,6 | 37,1 | 1,56 | 22,5 | 21,2 |
| 22 | 16 | 65 | 33,7 | 2,7 | 23 | 20,9 |

Contrairement aux exemples comparatifs, les exemples de l'invention ne nécessitent pas l'ajout de solvant pour obtenir la même viscosité d'application, ce qui signifie que les compositions prêtes à l'emploi contiendront moins de composé organiques volatiles (VOC).

### Mesure du pot life.

Le pot life est mesuré comme étant le temps nécessaire au doublement de la viscosité.

La valeur est extrapolée à partir des courbes Viscosité = f (temps). Un pot life trop court est problématique car ne permettra à l'applicateur de disposer de suffisamment de temps pour l'application avant que les parties A et B ne réticulent dans le pot.

**Tableau 14**

| n° exemple | Pot-life (min) |
|---|---|
| 17 | 77 |
| 18 | 75 |
| 19 | 76 |
| 20 | 73 |
| 21 | 74 |
| 22 | 73 |

Les exemples de l'invention présentent des pot life comparables aux produits des exemples comparatifs.

### Mesure des propriétés sur film / Application de la formule vernis sur plaque de verre

Les compositions sont appliquées sur plaque de verre (épaisseur humide = 200 µm) soumises à évaporation des solvants pendant 20 minutes à température ambiante puis réticulées 30 minutes à 60°C. On évalue ensuite les propriétés suivantes au bout de 7 jours.

### Brillance

La brillance d'un revêtement est une des propriétés les plus utilement mesurables. Le principe est de diriger, sous un angle de 20°, 60° ou 85°, un faisceau lumineux sur la surface à examiner. Les rayons réfléchis sont recueillis par une cellule photoélectrique. Grâce à un galvanomètre, l'appareil donne une valeur de 0 à 100 proportionnelle à la brillance. Un étalon en céramique sert de référence et représente la valeur maximale. On exprime la brillance en % (ou unité de brillance).La brillance est mesurée après 7 jours de séchage à 23°C et 50 % d'humidité relative, à l'aide d'un appareil Glossmeter (BYK).

**Tableau 15**

| Exemple | Brillance | | |
|---|---|---|---|
| | 60° | 20° | Haze |
| 17 | 98 | 96 | 22 |
| 18 | 97 | 95 | <20 |
| 19 | 98 | 97 | 24 |
| 20 | 98 | 93 | <20 |
| 21 | 99 | 98 | <20 |
| 22 | 99 | 98 | 24 |

L'ensemble des films présente un aspect brillant et se caractérise par l'absence de voile.

### Résistance chimique

La résistance chimique par rapport à de nombreux agents agressifs est évaluée. On procède à l'exposition du film à des cotons imbibés de divers agents agressifs. Après un certain temps, on effectue une cotation visuelle du film en cotant de 0 à 5 ou 6 selon les agents agressifs (0 = film intact, 5ou 6 = film détruit). Dans les exemples suivants, la durée de contact est de 1 h pour tous les composés sauf pour l'eau (16h).

### Séchage 60°C pendant 30min

**Tableau 16**

| Exemple | H₂O | NH₃ (1 % dans l'eau) | Ethanol (48% dans l'eau) | Acide acétique (10% dans l'eau) |
|---|---|---|---|---|
| 17 | 2 | 0 | 2 | 0 |
| 18 | 2 | 0 | 2 | 0 |
| 19 | 0 | 0 | 2 | 0 |
| 20 | 2 | 0 | 2 | 0 |
| 21 | 2 | 0 | 2 | 0 |
| 22 | 2 | 0 | 2 | 0 |

L'exemple 19 selon l'invention permet d'obtenir des propriétés de résistances chimiques équivalentes aux produits comparatifs.

### Exemples 23 à 27 d'application

### Mesure des propriétés sur film /Application de la formule vernis sur plaque métal

On applique au pistolet pneumatique une couche de primaire sur des plaques acier type R46 (commercialisées par la société Q-Panel) préalablement dégraissées.

Le primaire est composé d'une partie A et d'une partie B qui sont mélangées avant utilisation et diluées avec la partie C (solvant).

La composition massique du primaire est la suivante :

**Tableau 17**

| Partie A (%poids) | Partie B (%poids) | Partie C (%poids) |
|---|---|---|
| 66,5 | 16,6 | 16,9 |

| | | |
|---|---|---|
| Partie A : primaire gris 285-60 VOC de la société Glasurit Partie B : durcisseur de composition suivante : | | |

**Tableau 18**

| Produit | % massique | Fournisseur |
|---|---|---|
| Tolonate HDB75MX (polyisocyanate à structure biuret sur base HDI) | 58,7 | Perstorp |
| Xylène | 2,7 | |
| Ethylbenzène | 1 | |
| N butyl acétate | 25 | |
| Acétate d'isobutyle | 10 | |
| Acétate de méthoxypropyle | 2,6 | |

Partie C : mélange de solvants de composition suivante :

**Tableau 19**

| Produit | % massique |
|---|---|
| Xylène | 20,6 |
| Ethylbenzène | 7,4 |
| N butyl acétate | 44,1 |
| Acétate d'isobutyle | 20,6 |
| Acétate de méthoxypropyle | 7,3 |

Les plaques sont réticulées à 60°C pendant 30 min. On applique ensuite au pistolet une couche de base selon la composition massique suivante :

**Tableau 20**

| Base blanche autowave AW MM00 de Akzo Nobel (% poids) | Eau (% poids) |
|---|---|
| 90 | 10 |

Le séchage de la base est réalisé à 23°C pendant 3 heures puis on applique au pistolet la couche de vernis selon les compositions des exemples 7 à 11.

Les plaques sont alors réticulées pendant 7 jours en atmosphère contrôlée (23°C, 50 % humidité relative)
A l'issue de ces 7 jours, on procède aux évaluations suivantes :

### Essai de résistance au choc par chute d'une bille

Il s'agit dévaluer la résistance au choc d'un film de peinture ou vernis sur plaque d'acier en observant l'apparition de craquelures ou de décollements.

L'essai consiste à soumettre le revêtement au choc d'un percuteur de dimensions et de poids déterminés dont la hauteur de chute est réglable. On détermine ainsi la hauteur maximale à partir de laquelle le film de peinture est abîmé par le choc.

On dispose de deux appareils d'essai à chute de bille (Erichsen) l'un équipé pour les chocs AFNOR dont la référence est ISO 6272 (poids de 1000 g) et l'autre pour les chocs ASTM dont la référence est D 2794 (poids de 910,3 g).

Le résultat donné indique la hauteur maximale obtenue avant apparition de craquelures :

**Tableau 21**

| Exemple | Exemple composition | Epaisseur apprêt (µm) | Epaisseur base (µm) | Epaisseur vernis (µm) | Choc AFNOR(cm) | Choc ASTM (cm) |
|---|---|---|---|---|---|---|
| 23 | 17 | 49 | 50 | 50 | 100 | 80 |
| 24 | 18 | 52 | 50 | 40 | 100 | 80 |
| 25 | 19 | 53 | 40 | 35 | 100 | 80 |
| 26 | 20 | 65 | 50 | 50 | 100 | 80 |
| 27 | 21 | 48 | 50 | 42 | 100 | 80 |

Tous les produits passent le test.

### Rub test (test de résistance au frottement en présence d'un solvant)

Le film de peinture ou de vernis est soumis aux frottements répétés d'un coton imbibé de solvant (méthyléthyl cétone), et on examine ensuite la partie testée.Le nombre d'A/R (à+/- 10) à partir duquel le film devient collant ou le nombre d'A/R (à+/- 10) à partir duquel le film commence à se détruire est noté.

Si le film n'a pas été dissout lors du test, on indique « >200 » et on spécifie s'il y a perte de brillance visible à l'oeil nu (PB) en notant « >200PB ».

**Tableau 22**

| Exemple | Exemple produit | Exemple composition | Epaisseur apprêt (µm) | Epaisseur base (µm) | Epaisseur vernis (µm) | RUB test (nbre AR) |
|---|---|---|---|---|---|---|
| 23 | 11 | 17 | 49 | 49 | 50 | >200 |
| 24 | 12 | 18 | 50 | 50 | 35 | >200 |
| 25 | 13 | 19 | 53 | 40 | 35 | >200 |
| 26 | 14 | 20 | 46 | 46 | 64 | >200 |
| 27 | 15 | 21 | 48 | 50 | 42 | >200 PB |

### Exemples 28 à 35 d'application

Les produits issus des exemples 11 à 13 sont utilisés pour préparer des compositions auto émulsionnables selon les proportions suivantes.

Les exemples 31 et 35 sont des exemples comparatifs utilisant la référence commerciale du Tolonate HDT LV2 .

**Tableau 23**

| exemple | produit de l'exemple | % poids produit exemple | % poids tolonate HDT | % poids ester de phosphate ethoxylé | % poids DMCHA | % poids X-EZM 502 |
|---|---|---|---|---|---|---|
| 28 | 11 | 33,45 | 14,61 | 1,55 | 0,39 | 50,00 |
| 29 | 12 | 34,92 | 13,20 | 1,50 | 0,38 | 50,00 |
| 30 | 13 | 33,48 | 14,60 | 1,54 | 0,38 | 50,00 |
| 31 | 15 | 33,35 | 14,67 | 1,58 | 0,40 | 50,01 |
| 32 | 11 | 11,15 | 4,87 | 0,52 | 0,13 | 83,33 |
| 33 | 12 | 11,64 | 4,40 | 0,50 | 0,13 | 83,33 |
| 34 | 13 | 11,16 | 4,87 | 0,51 | 0,13 | 83,33 |
| 35 | 15 | 11,12 | 4,89 | 0,53 | 0,13 | 83,33 |

Dans un premier temps, on procède à la neutralisation de l'ester de phosphate par la dimethylcylohexylamine en mélangeant sous agitation les deux produits. Le sel ainsi formé est rajouté avec les autres ingrédients et mélangé pendant 1 heure à l'aide d'un roule pot.

### Préparation de la formule du vernis acrylique

Il s'agit d'une formule de vernis bi composant pour application industrie générale.

On commence par réaliser un mélange d'additifs selon la composition massique suivante :

**Tableau 24**

| Référence | % poids | usage | fournisseur |
|---|---|---|---|
| Butylglycol | 43,89 | Co solvant | |
| Dehydran 1293 | 20,58 | Antimousse | Cognis |
| BYK 301 | 13,12 | Agent de tension | BYK Chemie |
| BYK 348 | 22,39 | Agent de mouillage | BYK Chemie |

On procède ensuite à la préparation de la partie A

### Préparation de la partie A

Les composés sont introduits sous agitation (appareil d'agitation Dispermatt) dans l'ordre du tableau suivant :

**Tableau 25**

| Référence | % poids | usage | fournisseur |
|---|---|---|---|
| Setalux 6511 AQ47 | 50,87 | Polyol | Nuplex |
| Setalux 6520 AQ45 | 17,67 | Polyol | Nuplex |
| H2O (déminéralisée) | 7,95 | | |
| DMEA (diméthyl éthanol amine) | 0,38 | Neutralisant | |
| Mélange d'additifs | 2,41 | | |
| BGA (butyle glycol acétate) | 7,04 | solvant | |
| H2O (déminérélisée | 13,68 | | |
| total | 100,00 | | |

### Préparation de la partie B

Les produits des exemples 28 à 35 sont dilués par simple mélange selon les proportions données ci-dessous avec du proglyde DMM (Dow).

**Tableau 26**

| exemple | produit de l'exemple | % poids produit exemple | % poids DMM |
|---|---|---|---|
| 28 | 11 | 82,6 | 17,4 |
| 29 | 12 | 82,6 | 17,4 |
| 30 | 13 | 82,6 | 17,4 |
| 31 | 15 | 80 | 20 |
| 32 | 11 | 82,6 | 17,4 |
| 33 | 12 | 82,6 | 17,4 |
| 34 | 13 | 82,6 | 17,4 |
| 35 | 15 | 80 | 20 |

On mélange ensuite la partie A et la partie B sous agitation manuelle dans les proportions suivantes de façon à conserver constant le ratio NCO/OH pour toutes les préparations :

**Tableau 27**

| exemple | % poids partie A | % poids partie B |
|---|---|---|
| 28, 29, 30, 32, 33, 34 | 77 | 33 |
| 31, 35 | 80 | 20 |

La qualité du mélange est évaluée selon les critères suivants :
Durée nécessaire (s) pour obtenir un mélange homogène. Cette durée est évaluée en secondes.
La présence de filament ou de particules (coté de 0 pour l'absence à 5 pour un grand nombre)
L'apparition d'un dépôt après 30 minutes de repos (coté de 0 pour l'absence de dépôt à 5 pour un dépôt important)

**Tableau 28**

| exemple | Durée de mélange (s) | Filaments | Particules | Dépôt après 30' |
|---|---|---|---|---|
| 28 | 30 | 0 | 0 | 0 |
| 29 | 30 | 0 | 0 | 0 |
| 30 | 30 | 0 | 0 | 0 |
| 31 | 30 | 0 | 0 | 0 |
| 32 | 30 | 0 | 0 | 0 |
| 33 | 30 | 0 | 0 | 0 |
| 34 | 30 | 0 | 0 | 0 |
| 35 | 30 | 0 | 0 | 0 |

Les compositions sont très facilement dispersables à la main et restent stables. Les produits issus de l'invention permettent de réaliser des compositions autoémulsionnables sans problèmes.

De plus l'augmentation de la proportion des produits de l'invention dans la formulation décrite au tableau 23 permet d'améliorer la brillance et le voile du film, signe d'une compatibilité améliorée.

**Tableau 29**

| exemple | % produit invention | Haze | Brillance (20°) |
|---|---|---|---|
| 28 | 33,45 | 63 | 86 |
| 30 | 33,48 | 80 | 85 |
| 31 | 33,35 | 89 | 82 |
| 32 | 11,15 | 251 | 67 |
| 34 | 11,16 | 229 | 66 |
| 35 | 11,12 | 238 | 66 |

### Exemple 36 - Impact du sodium sous forme carboxylate sur la synthèse de l'allophanate avec une quantité de trimère isocyanurate inférieure à 5%

Dans un réacteur tricol équipé d'une agitation, on charge sous courant d'azote 546 g de HDI (3,25 mole), puis 193 g de RHODASURF LA 30 (0,54 mole) et 0,19 g de tris 2-éthyl-2-hexanoate de bismuth (catalyseur)(1,06.10⁻⁴ mole)(solution à 12% de bismuth dans le n-butanol). La quantité de sodium sous forme acétate contenu dans le RHODASURF LA 30 est de 66 ppm. Le milieu réactionnel est chauffé pour atteindre la température de 140°C en 96 minutes. Le milieu réactionnel est maintenu à cette température pendant 1 heure environ. Le titre NCO du milieu réactionnel est régulièrement mesuré par méthode de dosage à la dibutylamine. La réaction est stoppée par ajout de 0,68 g d'acide para-toluènesulfonique formulé dans le 2-éthylhexanol quand le titre NCO du milieu réactionnel correspond au titre théorique attendu. Après 30 minutes, la température du milieu réactionnel est laissée revenir à température ambiante.

Le titre NCO du milieu réactionnel de départ est de 0,884 mole pour 100 g. Le titre NCO du milieu réactionnel final est de 0,762 mole de NCO pour 100 g.

On procède ensuite à 2 distillations successives sur film mince sous vide (sous 1 mm Hg environ) à la température de 160°C pour éliminer la plus grande partie du monomère n'ayant pas réagi.

La quantité de produit récupéré après distillation est de 381 g. Le titre NCO est de 0,267 mole pour 100 g soit 11,21% en poids.

La répartition en oligomères obtenue après séparation par Chromatographie par perméation de gel et analyse Infra rouge est donnée ci après :

| Type d'oligomère | % pondéral |
|---|---|
| HDI | 0,55 |
| Dimère vrai de HDI (2 chaînes HDI et un cycle uretidine dione) | 0,25 |
| Allophanate de RHODASURF LA 30 et de HDI | 27,7 |
| Trimère isocyanurate | 2,4 |
| Oligomères lourds constitués essentiellement de structures allophanates | 69 |

On constate donc que la teneur en trimère isocyanurate est effectivement inférieure à 5% en poids.

### Exemple 37 (comparatif)

On procède comme l'exemple 36 mais en utilisant un RHODASURF LA 30 contenant une teneur en sodium de 400 ppm, le sodium étant sous forme acétate.

Dans un réacteur tricol équipé d'une agitation, on charge sous courant d'azote 540 g de HDI (3,2 mole), puis 200 g de RHODASURF LA 30 (0,55 mole) et 0,2 g de tris(2-éthyl-hexanoate) de bismuth (1,06 10⁻⁴ mole) en solution à 12% de bismuth dans le n-butanol. On augmente la température du milieu réactionnel. Après 10 minutes, la température du milieu réactionnel atteint 70°C. De manière surprenante, la température augmente brutalement de manière exponentielle pour atteindre en 1 minute la température de 195°C. Le milieu réactionnel prend alors en masse. L'analyse du milieu réactionnel montre la formation majoritaire de trimères isocyanurates et polytrimères isocyanurates au côté d'allophanates de HDI et de n-butyle.

Le produit ne correspond donc pas au produit attendu.

### Exemple 38 (comparatif)

On procède comme l'exemple 36 mais en utilisant un RHODASURF LA 30 contenant une teneur en sodium de 250 ppm, le sodium étant sous forme acétate.

Dans un réacteur tricol équipé d'une agitation, on charge sous courant d'azote 530 g de HDI (3,2 mole), puis 205 g de RHODASURF LA 30 (0,55 mole) et 0,2 g de tris(2-éthyl-hexanoate) de bismuth (1,06 10⁻⁴ mole) en solution à 12% de bismuth dans le n-butanol. On augmente la température du milieu réactionnel. Après 15 minutes, la température du milieu réactionnel atteint 80°C. De manière surprenante on observe une exothermie de réaction non contrôlable avec prise en masse du milieu réactionnel. L'analyse du milieu réactionnel montre la formation majoritaire de trimères isocyanurates et polytrimères isocyanurates au côté d'allophanates de HDI et de n-butyle.

Le produit ne correspond donc pas au produit attendu.

### Exemple 39 (comparatif)

200 g de RHODASURF LA 30 dont le taux de sodium sous sa forme acétate est de 400 ppm sont passés sur une résine échangeuse d'ions à groupe SO₃H pendants. La teneur en sodium après passage sur la résine est de 0 ppm.

### Une synthèse est réalisée comme l'exemple 36.

La cinétique est fortement ralentie et l'ajout de l'acide para toluène sulfonique est réalisé après 5 heures de réaction.

On constate que l'absence de sodium sous forme acétate dans le milieu réactionnel entraîne une augmentation de temps de réaction.

### Exemple 40 (procédé avec utilisation de composés antioxydants)

Dans un réacteur tricol équipé d'une agitation, on charge sous courant d'azote 2 416 g d'hexaméthylène diisocyanate (HDI) (14,37 mole), puis 480 g de RHODASURF LA 30 (1,34 mole) et 33,2 g de solution de tris(2-éthyl-2-hexanoate) de bismuth (4,32.10⁻⁴ mole) dans le n-butanol (concentration : 0,831 % poids).

La quantité de sodium sous forme acétate contenu dans le RHODASURF LA 30 est de 18 ppm.

On ajoute au milieu réactionnel 0,89 g d'un mélange d'antioxydants constitué de tributylphosphite et 2,6-di-tert-butyl-4-méthyl-phénol (respectivement 66,6 - 33,4% poids). Le milieu réactionnel est chauffé pour atteindre la température de 140°C en 114 minutes. Le titre NCO du milieu réactionnel est régulièrement mesuré. Après 114 minutes, le titre NCO du milieu réactionnel est égal à 0,914 mole de NCO pour 100 g. 2,8 g d'acide paratoluène sulfonique en solution à 10 % dans le 2-éthylhexanol (le ratio molaire acide paratoluène sulfonique/ bismuth métal est de 3,4). Après 162 minutes, le titre NCO est de 0,907 mole pour 100 g. Après 30 minutes, la température du milieu réactionnel est laissée revenir à température ambiante. La coloration du milieu réactionnel est de 35 hazen.

Le milieu réactionnel est ensuite distillé pour éliminer le HDI monomère. La masse de produit récupéré est de 1 159 g. Le titre NCO du milieu réactionnel est de 0,311 mole pour 100 g soit 13,062%. Le bismuth est retrouvé à plus de 95% dans le produit final. Le taux de soufre contenu dans le milieu réactionnel est de 16 ppm. La viscosité du milieu réactionnel est de 128 mPas à 25°C.

L'HDI distillé est ensuite recyclé, le taux de soufre contenu dans l'HDI est de 2,8 ppm.

La composition du milieu réactionnel est présentée ci après :

| **CONSTITUANTS** | **% poids** |
|---|---|
| HDI monomère | < 0,05 |
| Carbamate d'éthylhexyle et d'HDI | 0,2 |
| Dimère de HDI | 0,3 |
| Allophanate de n-butyle et de HDI | 10,9 |
| Allophanate de LA30 et de HDI | 28.4 |
| Trimère de HDI | 0,8 |
| Lourds contenant essentiellement des structures allophanates | 59,4 |

### Exemple 41 (procédé avec utilisation de composés antioxydants)

On procède comme pour l'exemple 40 mais la réaction se passe à 85°C.

Dans un réacteur tricol équipé d'une agitation, on charge sous courant d'azote 2402 g d'hexaméthylène diisocyanate (HDI) (14,28 mole), puis 481 g de RHODASURF LA 30 (1,34 mole) et 33,3 g de solution de tris(2-éthyl-2-hexanoate) de bismuth (8,28.10⁻⁴ mole) dans le n-butanol (concentration : 1,589% poids). La quantité de sodium sous forme acétate contenu dans le RHODASURF LA 30 est de 30 ppm. On ajoute au milieu réactionnel 2,2 g d'un mélange d'antioxydants constitué de tributylphosphite et de 2,6-di-tert-butyl-4-méthyl-phénol (respectivement 66,6 - 33,4 % poids). Le milieu réactionnel est chauffé pour atteindre la température de 85°C en 55 minutes. Le titre NCO du milieu réactionnel est régulièrement mesuré. Après 136 minutes, le titre NCO du milieu réactionnel est égal à 0,84 mole de NCO pour 100 g et après 142 minutes 2,8 g d'acide paratoluène sulfonique en solution à 10 % dans le 2-éthylhexanol (ratio molaire acide paratoluène sulfonique / bismuth métal = 3,4) sont ajoutés pour bloquer la réaction. 30 minutes après l'ajout du bloqueur, le titre NCO est de 0,83 mole pour 100 g. Après 30 minutes, la température du milieu réactionnel est laissée revenir à température ambiante. La coloration du milieu réactionnel est de 15 hazen.

Le milieu réactionnel est ensuite distillé pour éliminer le HDI monomère. La masse de produit récupéré est de 1 141 g. Le titre NCO du milieu réactionnel est de 0,296 mole pour 100 g soit 12,43%. La viscosité du milieu réactionnel est de 148 mPas à 25°C.

L'HDI distillé est ensuite recyclé, le taux de soufre contenu dans l'HDI est de 2,8 ppm.

La composition du milieu réactionnel avant distillation est présentée ci après :

| **CONSTITUANTS** | **% poids** |
|---|---|
| HDI monomère | 0,2 |
| Carbamate d'éthylhexyle et de HDI | 0,2 |
| Dimère de HDI | < 0,1 |
| Allophanate de n Butyle et de HDI | 10,8 |
| Allophanate de RHODASURF LA30 et de HDI | 25,7 |
| Trimère de HDI | 0,7 |
| Lourds contenant des structures allophanates | 62,3 |

## Revendications

1. Procédé de préparation d'allophanate d'un ou plusieurs isocyanates identiques ou différents, ou d'un mélange de différents allophanates, par réaction d'un (ou plusieurs) isocyanate(s) avec au moins un monoalcool comprenant une fonction éther ou polyéther, **caractérisé en ce que** la réaction est effectuée en présence d'un composé contenant du bismuth à titre de catalyseur et d'un composé métallique à titre de co-catalyseur choisi parmi les carboxylates de métal alcalin ou alcalino-terreux, la teneur en composé métallique étant comprise de 0,5 à 100 ppm par rapport à la quantité de monoalcool.

2. Procédé selon la revendication 1, **caractérisé en ce que** le monoalcool est un composé de formule R-[O-CH(R₁)-CH₂]ₙ-OH, dans laquelle R₁ représente H, ou un groupe alkyle de préférence en C₁-C₈, notamment méthyle, ou polyéther, notamment -CH₂OR₁₀, R₁₀ représentant une chaîne hydrocarbonée, notamment polyoxyalkylène, de préférence polyoxyéthylène, n est un nombre entier avantageusement de 1 à 10, de préférence de 1 à 5, et R est un groupe alkyle linéaire ou ramifié en C₁-C₂₀, ou R est un groupe R₂-CO-, R₂ étant un groupe alkyle linéaire ou ramifié en C₁-C₂₀.

3. Procédé selon les revendications 1 ou 2, **caractérisé en ce que** le composé contenant du bismuth est un composé de formule Bi(R₁,R₂,R₃) avec R₁, R₂, R₃ qui sont des molécules hydrocarbonées, identiques ou différentes, possédant un nombre de carbones compris entre 1 et 50 atomes de carbone, de préférence entre 1 et 25 atomes de carbone, et ayant au moins une fonction capable de se lier à l'atome de bismuth et dont le pKa dans l'eau est supérieur à 1, de préférence supérieur à 2.

4. Procédé selon l'une quelconque des revendications 1 à 3, **caractérisé en ce que** le composé contenant du bismuth comprend au moins une fonction choisie parmi un acide carboxylique, un alcool, un hydroxycarbonate, un thiol, une amine et un carbamoyle (-NH-C=O).

5. Procédé selon l'une quelconque des revendications 1 à 4, **caractérisé en ce que** le composé contenant du bismuth est choisi parmi le tri acétate de bismuth, le tris (2 éthyle hexanoate) de bismuth, le tris (décanoate) de bismuth, le tris (palmitate) de bismuth, le subsalicylate de bismuth, le subgallate de bismuth et le lactate de bismuth.

6. Procédé selon l'une quelconque des revendications 1 à 5, **caractérisé en ce que**
le (les) isocyanate(s) est (sont) un (des) monomère(s) isocyanate(s), répondant à au moins une, avantageusement deux, de préférence trois des conditions ci-après :
- au moins une, avantageusement deux, des fonctions NCO sont reliées à un squelette hydrocarboné, par l'intermédiaire d'un carbone saturé (sp³) ;
- au moins un, avantageusement deux, desdits carbones saturés (sp³) est porteur d'au moins un, avantageusement deux hydrogène(s).
- tous les carbones intermédiaires à partir desquels les fonctions isocyanates sont reliées au squelette hydrocarboné, sont des carbones saturés (sp³), lesquels sont avantageusement en partie, de préférence en totalité, porteurs d'un hydrogène, de préférence de deux hydrogènes..

7. Procédé selon l'une quelconque des revendications 1 à 6, **caractérisé en ce que** le rapport NCO/OH est supérieur à 2, de préférence supérieur à 4.

8. Procédé selon l'une quelconque des revendications 1 à 7, **caractérisé en ce que** les allophanates répondent à la formule générale II : 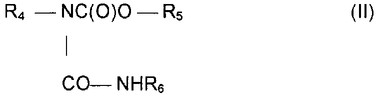 dans laquelle :
- R₄ et R₆ identiques ou différents représentent un groupe hydrocarboné, notamment aliphatique, cycloaliphatique, hétérocyclique ou aromatique, comprenant une fonction isocyanate vraie ou dérivée, et
- R₅ représente le reste d'un composé monoalcool comprenant une fonction éther ou polyéther après réaction de l'hydrogène de la fonction OH.

9. Procédé selon l'une quelconque des revendications 1 à 8, **caractérisé en ce que** la réaction de l'isocyanate avec le monoalcool est effectuée en outre en présence de composés antioxydants.

10. Procédé selon l'une quelconque des revendications 1 à 5, **caractérisé en ce que** le (les) isocyanate(s) est (sont) un (des) uréthane(s).

## Patentansprüche

1. Verfahren zur Herstellung eines Allophanats eines oder mehrerer identischer oder verschiedener Isocyanate oder eines Gemisches verschiedener Allophanate durch Reaktion eines Isocyanats (oder mehrerer Isocyanate) mit mindestens einem Monoalkohol, der eine Ether- oder Polyetherfunktion umfasst, **dadurch gekennzeichnet, dass** die Reaktion in Gegenwart einer bismuthhaltigen Verbindung als Katalysator und einer metallischen Verbindung als Cokatalysator durchgeführt wird, der aus den Alkalimetall- oder Erdalkalimetall-Carboxylaten gewählt ist, wobei der Gehalt an metallischer Verbindung von 0,5 bis 100 ppm in Bezug auf die Monoalkoholmenge beträgt.

2. Verfahren nach Anspruch 1, **dadurch gekennzeichnet, dass** der Monoalkohol eine Verbindung mit der Formel R-[O-CH(R₁)-CH₂]ₙ-OH ist, in welcher R₁ für H oder eine Alkylgruppe, bevorzugt eine C₁-C₈-Alkylgruppe, insbesondere Methyl oder Polyether, insbesondere -CH₂OR₁₀ steht, in welcher R₁₀ für eine Kohlwasserstoffkette, insbesondere Polyoxyalkylen, bevorzugt Polyoxyethylen steht, n eine ganze Zahl, vorteilhafterweise von 1 bis 10, bevorzugt von 1 bis 5 ist, und R eine geradkettige oder verzweigte C₁-C₂₀-Alkylgruppe ist oder R eine R₂-CO-Gruppe ist, wobei R₂ eine geradkettige oder verzweigte C₁-C₂₀-Alkylgruppe ist.

3. Verfahren nach Anspruch 1 oder 2, **dadurch gekennzeichnet, dass** die bismuthhaltige Verbindung eine Verbindung mit der Formel Bi(R₁,R₂,R₃) ist, wobei R₁, R₂, R₃ identische oder verschiedene Kohlenwasserstoffmoleküle sind, die eine Kohlenstoffzahl zwischen 1 und 50 Kohlenstoffatomen, bevorzugt zwischen 1 und 25 Kohlenstoffatomen, besitzen und mindestens eine Funktion aufweisen, die in der Lage ist, sich an das Bismuthatom zu binden und deren pKa-Wert in Wasser größer als 1 und bevorzugt größer als 2, ist.

4. Verfahren nach einem der Ansprüche 1 bis 3, **dadurch gekennzeichnet, dass** die bismuthhaltige Verbindung mindestens eine Funktion umfasst, die aus einer Carbonsäure, einem Alkohol, einem Hydroxycarbonat, einem Thiol, einem Amin und einem Carbamoyl (-NH-C=O) gewählt ist.

5. Verfahren nach einem der Ansprüche 1 bis 4, **dadurch gekennzeichnet, dass** die bismuthhaltige Verbindung aus dem Bismuth-Triacetat, dem Bismuth tris(2-ethylhexanoat), dem Bismuth tris(decanoat), dem Bismuth tris(palmitat), dem Bismuth-Subsalicylat, dem Bismuth-Subgallat und dem Bismuth-Lactat gewählt ist.

6. Verfahren nach einem der Ansprüche 1 bis 5, **dadurch gekennzeichnet, dass** das (die) Isocyanat(e) ein Isocyanatmonomer(e) ist (sind), das (die) mindestens eine, vorteilhafterweise zwei, bevorzugt drei der nachstehenden Bedingungen erfüllt (erfüllen):
- mindestens eine, vorteilhafterweise zwei der NCO-Funktionen sind über einen gesättigten Kohlenstoff (sp³) an ein Kohlenwasserstoffgerüst gebunden;
- mindestens einer, vorteilhafterweise zwei der gesättigten Kohlenstoffe (sp³) sind Träger von mindestens einem, bevorzugt zwei Wasserstoff(en);
- alle Zwischenkohlenstoffe, ab denen die Isocyanatfunktionen an das Kohlenwasserstoffgerüst gebunden sind, sind gesättigte Kohlenstoffe (sp³), die vorteilhafterweise teilweise, bevorzugt in Gänze, Träger von einem Wasserstoff, bevorzugt von zwei Wasserstoffen, sind.

7. Verfahren nach einem der Ansprüche 1 bis 6, **dadurch gekennzeichnet, dass** das Verhältnis NCO/OH größer als 2, bevorzugt größer als 4, ist.

8. Verfahren nach einem der Ansprüche 1 bis 7, **dadurch gekennzeichnet, dass** die Allophanate der folgenden allgemeinen Formel II entsprechen: 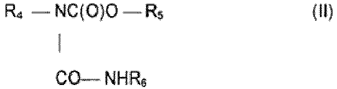 in welcher:
- R₄ und R₆, identisch oder verschieden, für eine insbesondere aliphatische, cycloaliphatische, heterocyclische oder aromatische Kohlenwasserstoffgruppe stehen, die eine echte oder abgeleitete Isocyanatfunktion umfasst, und
- R₅ für den Rest einer Monoalkoholverbindung steht, die nach Reaktion des Wasserstoffs der OH-Funktion eine Ether- oder Polyetherfunktion umfasst.

9. Verfahren nach einem der Ansprüche 1 bis 8, **dadurch gekennzeichnet, dass** die Reaktion des Isocyanats mit dem Monoalkohol ferner in Gegenwart von antioxidierend wirkenden Verbindungen durchgeführt wird.

10. Verfahren nach einem der Ansprüche 1 bis 5, **dadurch gekennzeichnet, dass** das (die) Isocyanat(e) ein Urethan(e) ist (sind).

## Claims

1. A method for preparing allophanate from one or more identical or different isocyanates, or a mixture of different allophanates, by reacting one (or more) isocyanate(s) with at least one monoalcohol comprising an ether or polyether function, **characterised in that** the reaction is carried out in the presence of a bismuth-containing compound, as a catalyst, and a metal compound as a co-catalyst chosen from the alkali metal or alkaline earth metal carboxylates, the metal compound content being between 0.5 and 100 ppm with respect to the quantity of monoalcohol.

2. The method according to claim 1, **characterised in that** the monoalcohol is a compound of formula R-[O-CH(R₁)-CH₂]ₙ-OH, wherein R₁ is H, or a preferably C₁-C₈ alkyl group, in particular methyl, or polyether, in particular -CH₂OR₁₀, R₁₀ being a hydrocarbon chain, in particular polyoxyalkylene, preferably polyoxyethylene, n is an integer advantageously from 1 to 10, preferably from 1 to 5, and R is a linear or branched C₁-C₂₀ alkyl group, or R is an R₂-CO- group, R₂ being a linear or branched C₁-C₂₀ alkyl group.

3. The method according to claims 1 or 2, **characterised in that** the bismuth-containing compound is a compound of formula Bi(R₁,R₂,R₃) with R₁, R₂, R₃ which are identical or different hydrocarbon molecules, having a number of carbon atoms between 1 and 50 carbon atoms, preferably between 1 and 25 carbon atoms, and having at least one function capable of bonding with the bismuth atom and for which the pKa in water is higher than 1, preferably higher than 2.

4. The method according to any one of claims 1 to 3, **characterised in that** the bismuth-containing compound comprises at least one function chosen from among a carboxylic acid, an alcohol, a hydroxycarbonate, a thiol, an amine and a carbamoyl (-NH-C=O).

5. The method according to any one of claims 1 to 4, **characterised in that** the bismuth-containing compound is chosen from among bismuth triacetate, bismuth tris(2-ethylhexanoate), bismuth tris(decanoate), bismuth tris(palmitate), bismuth subsalicylate, bismuth subgallate and bismuth lactate.

6. The method according to any one of claims 1 to 5, **characterised in that** the isocyanate(s) is (are) isocyanate monomer(s), fulfilling at least one, advantageously two, preferably three of the following conditions:
- at least one, advantageously two, of the NCO functions are bonded to a hydrocarbon backbone via a saturated carbon atom (sp³);
- at least one, advantageously two, of said saturated carbon atoms (sp³) carry at least one, advantageously two hydrogen atoms;
- all of the intermediate carbon atoms by which the isocyanates are bonded to the hydrocarbon backbone are saturated carbon atoms (sp³), which are advantageously partially, preferably entirely, carriers of a hydrogen atom, preferably of two hydrogen atoms.

7. The method according to any one of claims 1 to 6, **characterised in that** the NCO/OH ratio is higher than 2, preferably higher than 4.

8. The method according to any one of claims 1 to 7, **characterised in that** the allophanates correspond to general formula II: 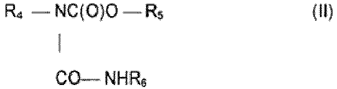 wherein:
- R₄ and R₆, identical or different, are a hydrocarbon group, in particular an aliphatic, cycloaliphatic, heterocyclic or aromatic group, comprising a true or derived isocyanate function, and
- R₅ is the remainder of a monoalcohol compound that comprises an ether or polyether function after reaction of the hydrogen of the OH function.

9. The method according to any one of claims 1 to 8, **characterised in that** the reaction of the isocyanate with the monoalcohol is further carried out in the presence of antioxidant compounds.

10. The method according to any one of claims 1 to 5, **characterised in that** the isocyanate(s) is (are) urethane(s).
